# EUROPEAN PATENT SPECIFICATION

(11) **EP 1 488 124 B1**
(45) Date of publication and mention of the grant of the patent: **06.10.2010**
(21) Application number: 03708784.8
(22) Date of filing: 11.03.2003
(51) Int. Cl.: F16D 33/20

(54) **HYDRODYNAMIC COUPLING**
HYDRODYNAMISCHE KUPPLUNG
RACCORD HYDRODYNAMIQUE

(30) Priority: 19.03.2002 SE 0200847
(43) Date of publication of application: 22.12.2004
(73) Proprietor: VOLVO LASTVAGNAR AB, 405 08 Göteborg (SE)
(72) Inventor: GISELMO, Kent, S-235 38 Vellingen (SE); LARSSON, Per, S-411 43 Göteborg (SE)
(74) Representative: Fröhling, Werner Otto
(86) International application number: PCT/SE2003/000400
(87) International publication number: WO 2003/078856

(56) References cited:
- DE-U1- 9 202 578
- US-A- 3 260 052
- US-B1- 6 224 330

## Description

### TECHNICAL FIELD:

The present invention relates to a hydrodynamic coupling for transmitting torque between a normally driving pump impeller and a normally driven turbine rotor, both of which rotors are provided with respective, interacting sets of blades.

### BACKGROUND OF THE INVENTION:

Turbocharger units are often used in order to recover energy from engine exhaust gases, the turbocharger unit comprising an exhaust gas driven turbine which drives a compressor for compressing the combustion air delivered to the engine, so-called supercharging. A turbo compound unit is sometimes arranged downstream of the turbocharger unit, in order to recover a proportion of the residual energy from the exhaust gases. Such a turbo compound unit is a second exhaust gas driven turbine which, for example, mechanically transmits energy to the engine drive shaft or the like.

The turbo compound unit usually comprises a supported shaft having a fixed turbine rotor, which can be driven at a high rotational speed of up to approximately 80,000 rpm by the exhaust gases. This speed is stepped down by means of gears and where necessary other methods to much lower speeds and is transmitted to the engine shaft via a hydrodynamic coupling, which is intended to prevent torsional oscillations occurring in the engine shaft being transmitted to the turbine shaft. To this end, the hydrodynamic coupling comprises a normally driving pump impeller and a normally driven turbine rotor, both of which rotors are provided with respective, interacting sets of blades.

For all that, it has proved to be the case that an ordinary hydrodynamic coupling allows torsional oscillations to pass even though they are damped, which can give rise to unnecessary stresses on the turbine of the turbo compound unit. The amount of slip in the coupling, which is normally in the order of one percent or somewhat more, is a pure loss which adversely affects the efficiency of the engine. A low degree of slip simultaneously combined with good damping is the criterion for a good hydrodynamic coupling. Another problem with this type of coupling is that if too low a gear is wrongly selected the rotational speed can sometimes approach the turbine failure speed.

A system according to the preamble of claim 1 is known from DE-U-9202578.1.

### SUMMARY OF THE INVENTION:

An object of the invention is therefore to provide a hydrodynamic coupling with high efficiency and good damping which reduces the problems described above.

To achieve this object the coupling according to the invention is **characterized in that** each of the pump impeller blades is angled with its edge facing the turbine rotor in a direction opposite to the normal direction of rotation, and that each of the turbine rotor blades is angled with its edge facing the pump impeller in the said direction to the said direction of rotation. This design of the hydrodynamic coupling represents a relatively simple and cost-effective way of increasing its reliability.

Advantageous examples of embodiments of the invention are set forth in the succeeding subordinate claims.

### BRIEF DESCRIPTION OF THE DRAWINGS

The invention will be described in more detail below with reference to examples of embodiments shown in the drawing attached, in which
- Fig. 1: is a hydrodynamic coupling according to the invention, in a partially sectional view,
- Fig. 2: is a perspective view of the turbine rotor of the coupling, and
- Fig. 3: is a partially section perspective view of the pump impeller of the coupling.

### DESCRIPTION OF THE PREFERRED EMBODIMENTS:

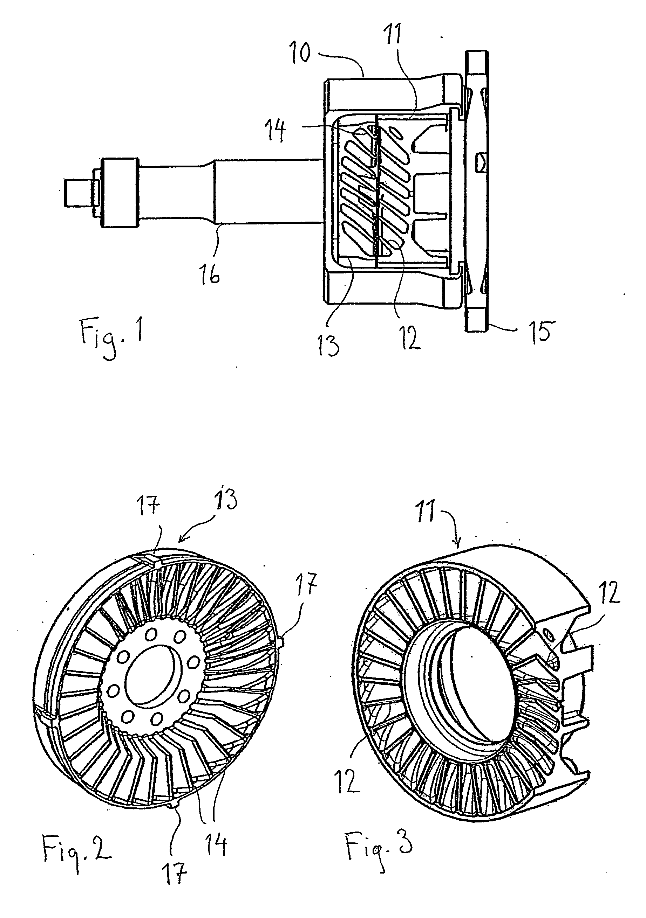

The hydrodynamic coupling shown in Fig. 1 is particularly intended for use as part of the powertrain of a heavy truck or a bus. The coupling comprises an outer casing 10 which encloses a pump impeller 11 having a set of blades 12 and a turbine rotor 13 having a corresponding set of blades 14. Both the pump impeller and the turbine rotor are designed as blade wheels with sides facing one another, which are open at right angles to the longitudinal axis of the coupling. The two wheel sides are separated by a gap.

The casing 10 and the pump impeller 11 are rigidly connected to a toothed gear ring 15, which can be driven by the gear on a turbine shaft. These three parts are rotatably supported on a shaft 16, which is normally connected to the crankshaft of the internal combustion engine. The turbine rotor 13 is fixed on the shaft. The casing encloses a liquid such as oil from the lubricating oil system of the internal combustion engine, for example. Under the rotation of the pump impeller 11 the enclosed liquid is forced in a known manner by means of the pump impeller blades 12 and by the action of the centrifugal force toward the open side of the pump impeller, a high kinetic energy at the same time being imparted to the liquid. This energy is then partially transmitted to the turbine rotor 13 in that the overflowing liquid acts on the turbine rotor blades 14.

In a conventional hydrodynamic coupling the pump impeller blades and the turbine rotor blades are parallel to the longitudinal axis of the coupling. This means that the conventional coupling has the same performance characteristics regardless of the direction of the power flow in the coupling, that is to say both in normal engine operation, when the power flow is from the turbo compound unit to the engine shaft, and during engine braking, when the power flow is in the opposite direction from the engine shaft to the turbo compound unit.

As will be seen from the figures, according to the invention the pump impeller blades 12 are angled with their edge facing the turbine rotor in a direction opposite to the normal direction of rotation, and the turbine rotor blades 14 are angled in the said direction of rotation. One effect of this angling of the blades is that the coupling grips well in the normal power flow direction, but the coupling slips under a power flow in the opposite direction, that is to say during engine braking. When the turbo compound unit delivers power, the coupling grips and the power is transmitted to the engine shaft with great efficiency. When the turbine is not delivering power, for example in engine braking, the turbine is trailed at a lower speed than would otherwise have been the case with a conventional coupling, which reduces the friction losses.

This also means that the turbo compound unit is exposed to lower stresses during engine braking. In addition, the coupling according to the invention has a substantially greater ability to filter out torsional oscillations. Tests on a six-cylinder engine have shown that the effect is significant in the damping of vibration modes especially of the 3rd, 6th and 9th order, which may otherwise have a disturbing effect during engine braking. The harmonic oscillations are presumably damped in that the coupling according to the invention functions asymmetrically. At the same time the slip is lower than in a coupling with symmetrical blades.

The advantageous effects described above occur at a blade angle of between 40 and 50 degrees away from the longitudinal axis of the coupling, approximately 45 degrees, for example. It may also be assumed that these positive effects also occur to a varying extent at angles between 5 and 85 degrees away from the longitudinal axis of the coupling. It may be appropriate to have the same angle on the pump impeller blades and the turbine rotor blades, but it is also possible to have somewhat different angles on the blades of the two coupling rotors, provided that all blades are provided with the same angle on each rotor.

As will be seen from Fig. 2, the turbine rotor 13 is provided with scraper vanes 17 directed radially outward, which extend toward the casing, angled in the direction of rotation of the turbine rotor. The function of these scraper vanes is to scrape away dirt sediments from the inside wall of the casing.

The invention must not be regarded as being limited to the exemplary embodiment described above, a number of further variants and modifications instead being feasible within the scope of the following patent claims.

## Claims

1. A system for recovering residual energy from the exhaust gases from an internal combustion engine comprising a hydrodynamic coupling for transmitting torque between a normally driving pump impeller (11) and a normally driven turbine rotor (13), both of which rotors are provided with respective, interacting sets of blades (12 and 14), and enabling kinetic energy to be transferred from a turbo - compound unit to the internal combustion engine,
**characterized in that**
each of the blades (12) of the pump impeller (11) is angled with its edge facing the turbine rotor (13) in a direction opposite to the normal direction of rotation, and
that each of the turbine rotor blades (14) is angled with its edge facing the pump impeller (11) in the said direction of rotation for damping harmonic oscillations in the hydrodynamic coupling.

2. The system as claimed in claim 1,
**characterized in that**,
each blade (12; 14) is angled at an angle of between 5 and 85 degrees away from the longitudinal axis of the coupling.

3. The system as claimed in claim 2,
**characterized in that**,
each blade (12; 14) is angled at an angle of between 40 and 50 degrees away from the longitudinal axis of the coupling.

4. The system as claimed in claim 2 or 3,
**characterized in that**,
the angles of the pump impeller blades and turbine rotor blades (12; 14) are such that each opposing pair of blades is situated largely in the same plane.

5. The system as claimed in any of the preceding claims,
**characterized in that**,
the pump impeller (11) and the turbine rotor (13) are together enclosed in a casing (10), and
that the turbine rotor (13) is provided on its outer surface facing the casing with projecting scraper elements (17) for scraping away dirt sediments from the inside wall of the casing, the scraper elements extending at an angle in the direction of rotation of the turbine rotor.

## Patentansprüche

1. System zur Wiedergewinnung von Restenergie aus Abgasen von einem Verbrennungsmotor mit einer hydrodynamischen Kupplung zur Übertragung eines Drehmoments zwischen einem normalerweise antreibenden Pumpenlaufrad (11) und einem normalerweise angetriebenen Turbinenrotor (13), wobei beide Rotoren mit jeweiligen in Wechselwirkung stehenden Sätzen von Schaufeln (12 und 14) versehen sind, und zur Ermöglichung einer Übertragung einer kinetischen Energie von einer Turboverbundeinheit auf den Verbrennungsmotor,
**dadurch gekennzeichnet,**
**dass** jede der Schaufeln (12) des Pumpenlaufrads (11) mit ihrem dem Turbinenrotor (13) zugewandten Rand in einer der normalen Drehrichtung entgegengesetzten Richtung im Winkel angeordnet ist, und
**dass** jede der Turbinenrotorschaufeln (14) mit ihrem dem Pumpenlaufrad (11) zugewandten Rand in der Drehrichtung im Winkel angeordnet ist, um harmonische Schwingungen in der hydrodynamischen Kupplung zu dämpfen.

2. System nach Anspruch 1, **dadurch gekennzeichnet, dass** jede Schaufel (12; 14) in einem Winkel zwischen 5 und 85 Grad weg von der Längsachse der Kupplung im Winkel angeordnet ist.

3. System nach Anspruch 2, **dadurch gekennzeichnet, dass** jede Schaufel (12; 14) in einem Winkel zwischen 40 und 50 Grad weg von der Längsachse der Kupplung im Winkel angeordnet ist.

4. System nach Anspruch 2 oder 3, **dadurch gekennzeichnet, dass** die Winkel der Pumpenlaufradschaufeln und der Turbinenrotorschaufeln (12; 14) so sind, dass jedes gegenüberliegende Paar von Schaufeln weitgehend in der gleichen Ebene liegt.

5. System nach einem der vorhergehenden Ansprüche,
**dadurch gekennzeichnet,**
**dass** das Pumpenlaufrad (11) und der Turbinenrotor (13) zusammen in einem Gehäuse (10) untergebracht sind, und
**dass** der Turbinenrotor (13) an seiner dem Gehäuse zugewandten Außenfläche mit vorstehenden Schaberelementen (17) versehen ist, um Schmutzablagerungen von der Innenwand des Gehäuses abzuschaben, wobei sich die Schaberelemente in einem Winkel in der Drehrichtung des Turbinenrotors erstrecken.

## Revendications

1. Système pour récupérer de l'énergie résiduelle à partir des gaz d'échappement provenant d'un moteur à combustion interne, comprenant un raccord hydrodynamique pour transmettre un couple entre une roue à aubes de pompe normalement d'entraînement (11) et un rotor de turbine normalement entraîné (13), les deux rotors étant munis d'ensembles d'aubes (12 et 14) respectifs interagissant, et permettant à de l'énergie cinétique d'être transférée depuis une unité de turborécupération vers le moteur à combustion interne,
**caractérisé en ce que**
chacune des aubes (12) de la roue à aubes de pompe (11) est inclinée avec son bord faisant face au rotor de turbine (13) dans une direction opposée à la direction de rotation normale, et
chacune des aubes de rotor de turbine (14) est inclinée avec son bord faisant face à la roue à aubes de pompe (11) dans ladite direction de rotation, pour amortir des oscillations harmoniques dans le raccord hydrodynamique.

2. Système selon la revendication 1,
**caractérisé en ce que**
chaque aube (12 ; 14) est inclinée sur un angle compris entre 5 et 85 degrés loin de l'axe longitudinal du raccord.

3. Système selon la revendication 2,
**caractérisé en ce que**
chaque aube (12 ; 14) est inclinée sur un angle compris entre 40 et 50 degrés loin de l'axe longitudinal du raccord.

4. Système selon la revendication 2 ou 3,
**caractérisé en ce que**
les angles des aubes de roue à aubes de pompe et des aubes de rotor de turbine (12 ; 14) sont tels que chaque paire d'aubes opposée se situe largement dans le même plan.

5. Système selon l'une quelconque des revendications précédentes,
**caractérisé en ce que**
la roue à aubes de pompe (11) et le rotor de turbine (13) sont enfermés ensemble dans un carter (10), et
**en ce que** le rotor de turbine (13) est muni sur sa surface extérieure faisant face au carter d'éléments racleurs faisant saillie (17) pour enlever des sédiments sales depuis la paroi intérieure du carter, les éléments racleurs s'étendant sur un angle dans la direction de rotation du rotor de turbine.
